# EUROPEAN PATENT SPECIFICATION

(11) **EP 3 531 888 B1**
(45) Date of publication and mention of the grant of the patent: **06.11.2024**
(21) Application number: 17865218.6
(22) Date of filing: 20.10.2017
(51) Int. Cl.: A47L 15/24, A47L 15/42, A47L 15/00

(54) **TUNNEL-TYPE DISHWASHER AND METHOD**
DURCHLAUFSPÜLMASCHINE UND VERFAHREN
LAVE-VAISSELLE DE TYPE TUNNEL ET PROCÉDÉ ASSOCIÉ

(30) Priority: 28.10.2016 SE 1651418
(43) Date of publication of application: 04.09.2019
(73) Proprietor: Wexiödisk Ab, 352 45 Växjö (SE)
(72) Inventor: ERIKSSON, Magnus, 352 35 Växjö (SE); KAZIC, Galib, 352 31 Växjö (SE)
(74) Representative: Industripatent i Växjö AB
(86) International application number: PCT/SE2017/051032
(87) International publication number: WO 2018/080377

(56) References cited:
- EP-A1- 2 818 089
- AU-A1- 2011 202 503
- DE-A1- 102008 028 304
- DE-A1- 4 428 738
- DE-C1- 4 100 164
- FR-A1- 2 540 720
- US-A- 4 156 621
- US-A1- 2009 120 465

## Description

### Field of the invention

The present invention relates to a tunnel-type dishwasher, and to a method of dishwashing a feed of wash items.

### Background of the invention

Consumption of water and energy represents, by far, the largest costs associated with owning and operating a tunnel-type dishwasher. Reduction of water and energy consumption is also highly desirable from the perspective of protecting the environment. EP 2 818 089 A1 discloses a tunnel-type dishwasher aiming to reduce the consumption of water and energy. Another document, DE 44 28 738 A1, suggests performing an initial pre-heating of the incoming fresh water in a heat exchanger arranged in the pre-rinse section of a dishwasher. However, there is a need for even further reducing the consumption of tunnel-type dishwashers.

### Summary of the invention

It is an object of the present invention to solve, or at least mitigate, parts or all of the above-mentioned problems. To this end, there is provided a tunnel-type dishwasher as defined in claim 1, the dishwasher comprising a water supply line for receiving clean water to be used in the dishwasher; a wash item entrance for receiving a feed of wash items to be washed by the dishwasher; a wash item exit for discharging said wash items when they have been washed by the dishwasher; a rinsing section upstream, with respect to a feed direction of said wash items, of the wash item exit; a main washing section upstream, with respect to said feed direction, of the rinsing section; a pre-washing section upstream, with respect to said feed direction, of the main washing section, the pre-washing section comprising a pre-washing sprayer for spraying a pre-washing liquid onto the wash items, a pre-washing liquid tank for pre-washing liquid that is to be sprayed from the pre-washing sprayer, and a pre-washing liquid inlet configured to receive liquid that has been used in the main washing and/or rinsing section(s); and a pre-washing liquid cooler for cooling the pre-washing liquid of the pre-washing liquid tank. The pre-washing liquid cooler allows reducing the water consumption of the dishwasher, since the need for moderately tempered, relatively clean water to the pre-washing section is reduced, which allows reducing the supply of clean water to e.g. the rinsing section. By way of example, according to EP 2 818 089 A1, cold tap water, or a bypass flow of moderately tempered rinse liquid, is supplied to the pre-washing section, thereby diluting the pre-washing liquid with liquid having a lower temperature. By using a pre-washing liquid cooler in the pre-washing liquid tank, the liquid supply to the pre-washing section can be reduced, and can, to an increased extent, rely on the flow of higher tempered liquid from the sections downstream, with respect to the feed direction of the wash items, of the pre-washing section. The flowrate of any bypass flow from the rinsing section to the pre-washing section does not need to be set to meet any cooling need of the pre-washing section, but can instead, for example, be adjusted to correspond to the need for clean final rinse liquid in the rinsing section, minus the need for regeneration of dishwashing liquid in the main washing section. A transporter may be configured to move the wash items in the feed direction from the wash item entrance, via the pre-washing, main washing, and rinsing sections to the wash item exit.

The cooler is configured as a pre-washing liquid heat exchanger arranged for exchanging heat between the clean water in the water supply line and the pre-washing liquid of the pre-washing liquid tank. Thereby, the heat removed from the pre-washing liquid is recycled for heating clean water to be used, e.g., for final rinse in the rinsing section. This reduces the energy consumption of the dishwasher. Typically, the pre-washing liquid tank may be provided with a spent liquid outlet connected to a drain. A lower temperature of the liquid sent to the drain generally means less energy consumed by the dishwasher.

The tunnel-type dishwasher further comprises a gas discharge flow heat exchanger connected to the water supply line upstream, with regard to a flow direction of the water in the water supply line, of the pre-washing liquid heat exchanger, and configured to exchange heat between the supply water and a discharge flow of air and steam from the dishwasher. The gas discharge flow heat exchanger allows recovering heat from the discharge flow of air and steam, which reduces the energy consumption of the dishwasher as well as the emission of heat and steam to the working environment outside the dishwasher.

According to an embodiment, said gas discharge flow heat exchanger may be arranged so as to receive said discharge flow of air and steam from the pre-washing section. Compared to receiving the discharge flow from other sections of the dishwasher, the lower temperature of the pre-washing section allows reducing the discharge flow rate, as well as results in a lower temperature of the discharge flow at the gas discharge outlet of said gas discharge flow heat exchanger. This may result in a significant improvement of the work environment around the dishwasher. Moreover, the lower flow rate and temperature of the discharge flow substantially reduces the cooling power needed to bring down the temperature of the discharge flow to a temperature suitable for discharge into the work environment. In combination with the pre-washing liquid heat exchanger downstream, with respect to the flow direction of the water in the water supply line, of the gas discharge flow heat exchanger, this synergistically results in that, for a given supply water flow rate, more cooling power of the supply water is saved for use in the pre-washing liquid heat exchanger.

According to an embodiment, the tunnel-type dishwasher may further comprise a fan configured to actively move said discharge flow of air and steam. The fan may be configured to generate a maximum discharge flow of less than 300 m³/h; according to further embodiments, it may be configured to generate a maximum discharge flow of less than 200 m³/h, or of less than 150 m³/h. According to tests, a discharge flow of less than 130 m³/h may be sufficient for maintaining an underpressure inside the dishwasher.

According to an embodiment, the pre-washing liquid cooler may be configured as a tube heat exchanger arranged inside the pre-washing liquid tank. Such an arrangement is particularly efficient for exchanging heat with the pre-washing liquid. Moreover, it is insensitive to clogging and relatively easy to clean.

According to another aspect of the invention, parts or all of the above mentioned problems are solved, or at least mitigated, by a method of dishwashing a feed of wash items as defined in claim 6, the method comprising moving said wash items in a forward direction through a pre-washing section, a main washing section, and a rinsing section; moving a flow of liquid in a backward direction through the rinsing section, the main washing section, and the pre-washing section; and cooling said liquid in the pre-washing section. The liquid may be cooled by heat conduction, for example by conducting heat to a cooler. Such a cooler may be configured as a heat exchanger. The cooler may be in direct contact with the liquid.

Said liquid is cooled in a pre-washing liquid tank of the pre-washing section by exchanging heat with supply water to be supplied to the rinsing section. The heat is exchanged between said liquid and said supply water via a heat exchanger. The pre-washing liquid tank is for liquid to be sprayed from a pre-washing sprayer of the pre-washing section onto the wash-items.

The method further comprises moving a flow of air and steam along said backward direction through the rinsing section, the main washing section, and the pre-washing section; and discharging said flow of air and steam via an outlet arranged in said pre-washing section.

According to an embodiment, the method may further comprise cooling said flow of air and steam by exchanging heat with supply water to be supplied to the rinsing section.

### Brief description of the drawings

The above, as well as additional objects, features and advantages of the present invention will be better understood through the following illustrative and nonlimiting detailed description of preferred embodiments of the present invention, with reference to the appended drawings, where the same reference numerals will be used for similar elements, wherein:
Fig. 1 is a schematic side view in section of a tunnel-type dishwasher;
Fig. 2a is a magnified view of a portion of the view of Fig. 1; and
Fig. 2b is a magnified view of another portion of the view of Fig. 1.

### Detailed description of the exemplary embodiments

Tunnel-type dishwashers are often used in e.g. restaurants, hotels, hospitals, etc., which generate a large amount of items to be washed. Typically, the items to be washed pass through the different sections of the tunnel-type dishwasher sequentially. A tunnel-type dishwasher may, by way of example, be of rack conveyor type, i.e. comprising a conveyor for moving dishwashing racks or baskets through the dishwasher, or of flight type, i.e. comprising a conveyor provided with support structures for holding the wash item individually, without the need for a rack.

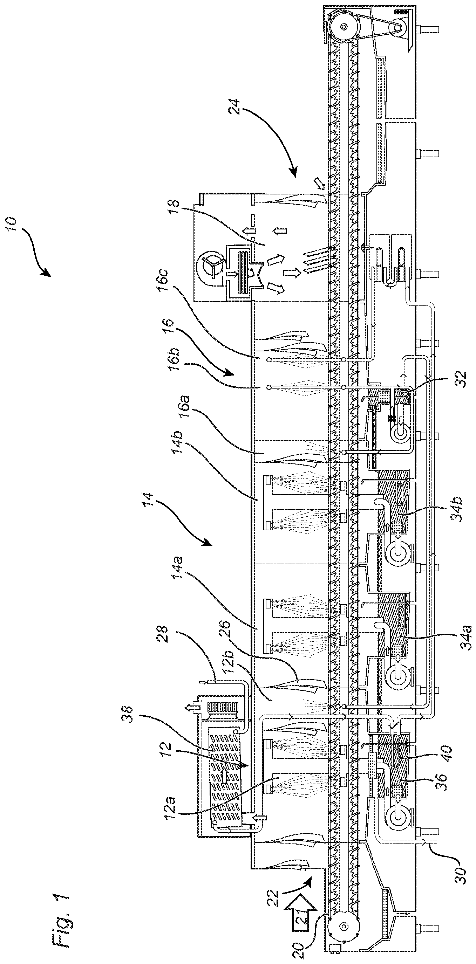

Fig. 1 illustrates a tunnel-type dishwasher 10 of flight type. The dishwasher 10 comprises a pre-washing section 12, a main washing section 14, a rinsing section 16, and a drying section 18. In the illustrated embodiment, the pre-washing section is divided into a recirculation pre-washing section 12a and a bypass pre-washing section 12b. The main washing section 14 comprises two consecutive sub-sections 14a, 14b. The rinsing section 16 comprises a rinsing entry zone 16a, a recirculation rinsing zone 16b, and a non-recirculation, final rinsing zone 16c. Items to be washed, such as trays, tableware, cooking utensils or similar, are placed directly onto an endless conveyor belt 20, which acts as a transporter and moves the items along a wash item feed direction 21 through a wash item entrance 22, via the consecutive sections 12, 14, 16, 18, to the wash item exit 24 of the dishwasher 10. Curtains 26 are provided at the entrance 22, between the sections 12a, 12b, 14, 16, 18, and at the exit 24, to avoid splashing and excessive heat transfer between sections and outside the dishwasher 10. Potable tap water is supplied to the dishwasher 10 via a water supply line 28, and is sprayed onto the wash items in the final rinsing zone 16c. A decanting arrangement allows liquid entering the final rinsing zone 16c to flow against the feed direction 21 of the wash items, via a recirculation rinsing liquid tank 32 arranged in the rinsing section 16; respective dishwashing liquid tanks 34a-b in the main washing sub-sections 14a-b; and a pre-washing liquid tank 36 arranged in the pre-washing section 12. Spent liquid leaves the dishwasher 10 via an outlet 30, which is connected to a drain (not shown).

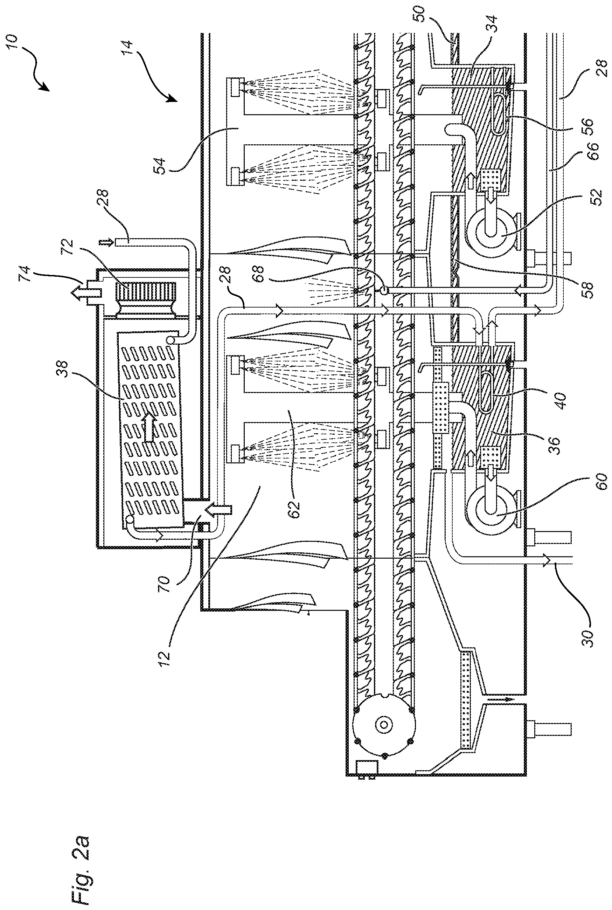

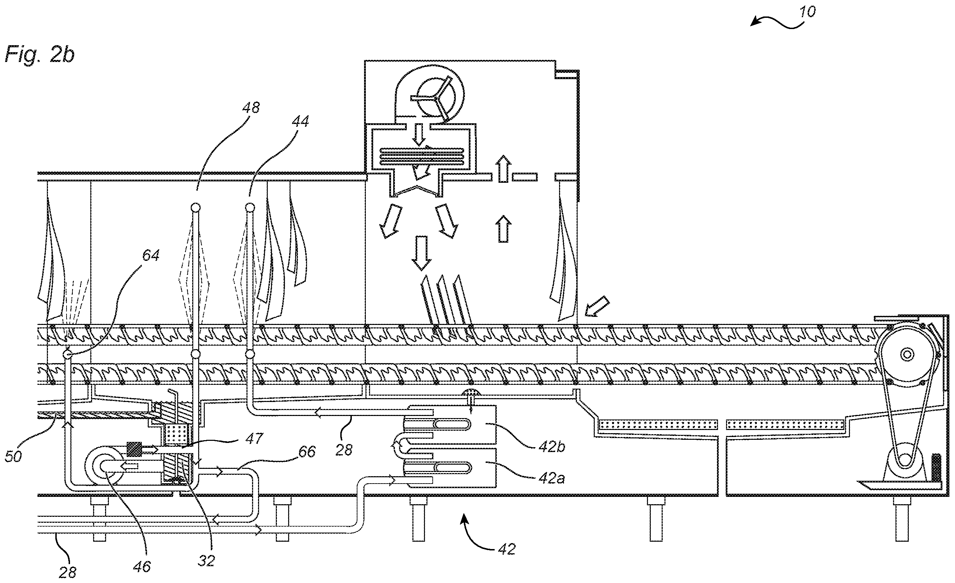

Figs 2a-b illustrate the dishwasher in greater magnification and, for clarity, with only one main washing section 14. Following the path of the water supply line 28, the supply water first passes through a gas discharge flow heat exchanger 38 configured to exchange heat between the supply water and a discharge flow of air and steam from the pre-washing section 12. A typical temperature of the supply water when entering the gas discharge flow heat exchanger 38 may be between 5 °C and 20 °C, and the gas discharge flow heat exchanger 38 may typically heat the supply water to a temperature of between 30 °C and 40 °C. The supply water is then passed on to a pre-washing liquid heat exchanger 40 arranged in the pre-washing liquid recirculation tank 36. In the pre-washing liquid heat exchanger 40, which is configured as a meandering tube for the supply water inside the pre-washing liquid tank 36, the supply water receives heat from the pre-washing liquid, and simultaneously cools the pre-washing liquid in the pre-washing liquid tank 36. A typical temperature of the supply water when leaving the pre-washing liquid heat exchanger 40 may be between 40 °C and 50 °C, which may be only slightly lower than the typical temperature of the pre-washing liquid in the pre-washing liquid recirculation tank 36. Typical temperatures of the pre-washing liquid in the pre-washing liquid recirculation tank 36 may be between 45 °C and 55 °C in order to avoid denaturing the protein content of any food residues on the wash items during pre-washing. Now with reference to Fig. 2b, the water supply line 28 is connected to a booster heater arrangement 42, downstream of the pre-washing liquid heat exchanger 40, for heating the supply water to a temperature of about 85 °C, which temperature is suitable for spraying onto the wash items in the final rinsing zone 16c in order for the wash items to quickly dry once they leave the rinsing section 16. The booster heater arrangement 42 comprises two electrical heaters 42a, 42b arranged in series. Finally, the water supply line 28 delivers the clean, hot water to a final rinse sprayer 44 in the final rinsing zone 16c, where it is used as final rinse liquid. Any rinsing agents may also be added to the water in the booster heater arrangement 42, or elsewhere in the rinsing section 16. Final rinse liquid that has been sprayed from the final rinse sprayer 44 is collected in the recirculation rinsing liquid tank 32, which stores rinsing liquid that is to be re-used. A rinsing liquid pump 46 pumps rinsing liquid from the recirculation rinsing liquid tank 32 into a rinsing liquid line 47, which is connected to a recirculation rinsing sprayer 48. Rinsing liquid sprayed from the recirculation rinsing sprayer 48 is once again collected in the recirculation rinsing liquid tank 32. Due to the recirculation, the rinsing liquid spends some time in the recirculation rinsing zone 16b, and cools off over time. Therefore, the rinsing liquid in the recirculation rinsing liquid tank 32 holds a lower temperature than the final rinse liquid sprayed from the final rinse sprayer 44. Excessive rinsing liquid in the recirculation rinsing liquid tank 32 is allowed to overflow, via a decanting passage 50, into the dishwashing liquid tank 34, which brings us back to Fig. 2a. In the dishwashing liquid tank 34, dishwashing chemicals, such as detergent, may be added to prepare the rinsing liquid to be used as dishwashing liquid.

A main washing pump 52 pumps dishwashing liquid from the dishwashing liquid tank 34 to a dishwashing sprayer 54, and dishwashing liquid sprayed from the dishwashing sprayer 54 is collected in the dishwashing liquid tank 34. The dishwashing liquid in the dishwashing liquid tank 34 is typically held at a temperature of about 60 - 65 °C, to efficiently remove the fat content of any food residues on the wash items. This temperature is maintained partly due to the decanting flow of the somewhat hotter rinsing liquid from the rinsing section 16, and partly by means of a dishwashing liquid heater 56. Excessive dishwashing liquid in the dishwashing liquid tank 34 is allowed to overflow, via a decanting passage 58, into the pre-washing liquid tank 36 for use as pre-washing liquid.

A pre-wash pump 60 pumps pre-washing liquid from the pre-washing liquid tank 36 to a pre-washing sprayer 62, and pre-washing liquid sprayed from the pre-washing sprayer 62 is collected in the pre-washing liquid tank 36. Excessive pre-washing liquid in the pre-washing liquid tank 36 is allowed to overflow into the outlet 30.

Again with reference to Fig. 2b, the rinsing liquid line 47 branches off to a rinsing section entry sprayer 64, which is arranged in the rinsing entry zone 16a of the rinsing section 16. Rinsing liquid sprayed from the rinsing section entry sprayer 16a is collected in the dishwashing liquid tank 34 (Fig. 2a). The rinsing liquid line 47 also branches off to a bypass line 66, which is configured to transport a bypass flow of rinsing liquid to the pre-washing section 12, bringing us once again to Fig. 2a. In the illustrated embodiment, the rinsing liquid bypass flow is sprayed from a bypass sprayer 68 arranged in the bypass pre-washing section 12b, and thereafter collected in the pre-washing liquid tank 36. Alternatively, the bypass flow may, for example, be allowed to flow directly into the pre-washing liquid tank 36. The flow rate of the bypass flow can be adjusted to bypass the excess rinsing liquid, if any, that is not needed for regenerating the dishwashing liquid in the main washing section 14; alternatively, the bypass flow may be completely dispensed with. Thanks to the pre-washing liquid heat exchanger 40, the bypass flow is not needed for cooling the pre-washing liquid in the pre-washing section 12. Hence, the final rinsing liquid flow rate may be reduced to just barely satisfy the need for final rinse of the wash items, or the need for regenerating the dishwashing liquid, whichever is the greatest.

Due to the sprayers and the elevated temperatures involved, the dishwasher 10, and particularly the rinsing section 16, generates substantial amounts of hot air and steam. The dishwasher 10 is configured to generate a flow of this air and steam in a flow direction opposite to the feed direction 21 of the wash items, and to draw the air and steam into the gas discharge flow heat exchanger 38 via an outlet 70 in the pre-washing section 12. Thereby, the lower temperature of the pre-washing section 12 will condense a portion of the steam, and reduce the gas volume, prior to discharge. The air and steam is actively drawn out of the pre-washing section 12 and through the gas discharge flow heat exchanger 38 by means of a fan 72, and discharged from a gas discharge outlet 74. Thanks to the low pre-washing section temperature enabled by the pre-washing liquid heat exchanger 40, the air holds a relatively low temperature, and holds a relatively limited steam content, already when entering the gas discharge flow heat exchanger 38. Due to the lower volume occupied by the relatively cool and dry air and steam mixture, the flow rate through the gas discharge flow heat exchanger 38 is relatively low, and thanks to the relatively low flow rate, a high heat exchanging efficiency in the gas discharge flow heat exchanger 38 may relatively easily be obtained. Thereby, a discharge flow rate as low as about 130 m³/h may be sufficient for maintaining an underpressure in the dishwasher 10, and the air discharged from the gas discharge outlet 74 may have a temperature as low as 22 °C.

The invention has mainly been described above with reference to a few embodiments. However, as is readily appreciated by a person skilled in the art, other embodiments than the ones disclosed above are equally possible within the scope of the invention, as defined by the appended patent claims.

For example, no bypass line 66 is needed; the pre-washing section 12 may, for example, be supplied with liquid only via the decanting flow 58 from the main washing section 14. The pre-washing liquid cooler does not need to be configured as a heat exchanger 40 for exchanging heat with supply water. It may be configured as a heat exchanger for exchanging heat with any other cooling medium, or may be configured as any other type of cooler, such as an electrical cooler.

## Claims

1. A tunnel-type dishwasher comprising
a water supply line (28) for receiving clean water to be used in the dishwasher (10);
a wash item entrance (22) for receiving a feed of wash items to be washed by the dishwasher (10);
a wash item exit (24) for discharging said wash items when they have been washed by the dishwasher (10);
a rinsing section (16) upstream, with respect to a feed direction (21) of said wash items, of the wash item exit (24);
a main washing section (14) upstream, with respect to said feed direction (21), of the rinsing section (16);
a pre-washing section (12) upstream, with respect to said feed direction (21), of the main washing section (14), the pre-washing section (12) comprising a pre-washing sprayer (62) for spraying a pre-washing liquid onto the wash items, a pre-washing liquid tank (36) for pre-washing liquid that is to be sprayed from the pre-washing sprayer (62), and a pre-washing liquid inlet (58, 68) configured to receive liquid that has been used in the main washing and/or rinsing section(s) (14, 16); and $
a gas discharge flow heat exchanger (38);
**characterised in that** the tunnel-type dishwasher comprises further
a pre-washing liquid cooler (40) for cooling the pre-washing liquid of the pre-washing liquid tank (36), wherein the pre-washing liquid cooler (40) is configured as a pre-washing liquid heat exchanger arranged for exchanging heat between the clean water in the water supply line (28) and the pre-washing liquid of the pre-washing liquid tank (36); and wherein
the agas discharge flow heat exchanger (38) is connected to the water supply line (28) upstream, with regard to a flow direction of the water in the water supply line (28), of the pre-washing liquid heat exchanger (40), and configured to exchange heat between the supply water and a discharge flow of air and steam from the dishwasher (10).

2. The tunnel-type dishwasher of claim 1, wherein said gas discharge flow heat exchanger (38) is arranged so as to receive said discharge flow of air and steam from the pre-washing section (12).

3. The tunnel-type dishwasher according to claim 2, further comprising a fan (72) configured to actively move said discharge flow of air and steam.

4. The tunnel-type dishwasher according to claim 3, wherein said fan (72) is configured to generate a maximum discharge flow of less than 300 m³/h.

5. The tunnel-type dishwasher according to any preceding claim, wherein the pre-washing liquid heat exchanger (40) is configured as a tube heat exchanger arranged inside the pre-washing liquid tank (36).

6. A method of dishwashing a feed of wash items, the method comprising
moving said wash items in a forward direction (21) through a pre-washing section (12), a main washing section (14), and a rinsing section (16);
moving a flow of liquid in a backward direction through the rinsing section (16), the main washing section (14), and the pre-washing section (12);
**characterised in that** the method comprises further
cooling said liquid in a pre-washing liquid tank (36) of the pre-washing section (12) by exchanging heat with supply water to be supplied to the rinsing section (16), wherein the pre-washing liquid tank (36) is for liquid to be sprayed from a pre-washing sprayer (62) of the pre-washing section (12) onto the wash items;
moving a flow of air and steam along said backward direction through the rinsing section (16), the main washing section (14), and the pre-washing section (12); and
discharging said flow of air and steam via an outlet arranged (70) in said pre-washing section (12).

7. The method according to claim 6, further comprising cooling said flow of air and steam by exchanging heat with supply water to be supplied to the rinsing section (16).

## Patentansprüche

1. Durchlaufgeschirrspülmaschine, umfassend
eine Wasserversorgungsleitung (28) zum Aufnehmen von sauberem Wasser, das in der Geschirrspülmaschine (10) zu verwenden ist;
einen Spülguteingang (22) zum Aufnehmen einer Zufuhr von Spülgut, das durch die Geschirrspülmaschine (10) zu spülen ist;
einen Spülgutausgang (24) zum Abgeben des Spülguts, nachdem es von der Geschirrspülmaschine (10) gespült wurde;
einen Abspülabschnitt (16), der in Bezug auf eine Zufuhrrichtung (21) des Spülguts stromaufwärts des Spülgutausgangs (24) ist;
einen Hauptspülabschnitt (14), der in Bezug auf die Zufuhrrichtung (21) stromaufwärts des Abspülabschnitts (16) ist;
einen Vorspülabschnitt (12), der in Bezug auf die Zufuhrrichtung (21) stromaufwärts des Hauptspülabschnitts (14) ist, wobei der Vorspülabschnitt (12) einen Vorspülsprüher (62) zum Sprühen einer Vorspülflüssigkeit auf das Spülgut, einen Vorspülflüssigkeitstank (36) für die Vorspülflüssigkeit, die von dem Vorspülsprüher (62) zu sprühen ist, und einen Vorspülflüssigkeitseinlass (58, 68) umfasst, der dazu konfiguriert ist, Flüssigkeit aufzunehmen, die in dem Hauptspül- und/oder Abspülabschnitt (14, 16) verwendet wurde;
und einen Gasabflussstromwärmetauscher (38);
**dadurch gekennzeichnet, dass** die Durchlaufgeschirrspülmaschine ferner einen Vorspülflüssigkeitskühler (40) zum Kühlen der Vorspülflüssigkeit des Vorspülflüssigkeitstanks (36) umfasst, wobei der Vorspülflüssigkeitskühler (40) als Vorspülflüssigkeitswärmetauscher konfiguriert ist, der zum Austauschen von Wärme zwischen dem sauberen Wasser in der Wasserversorgungsleitung (28) und der Vorspülflüssigkeit des Vorspülflüssigkeitstanks (36) angeordnet ist; und wobei
der Gasabflussstromwärmetauscher (38) bezüglich einer Strömungsrichtung des Wassers in der Wasserversorgungsleitung (28) stromaufwärts des Vorspülflüssigkeitswärmetauschers (40) mit der Wasserversorgungsleitung (28) verbunden und dazu konfiguriert ist, Wärme zwischen dem Versorgungswasser und einem Luft- und Dampfabflussstrom aus der Geschirrspülmaschine (10) auszutauschen.

2. Durchlaufgeschirrspülmaschine nach Anspruch 1, wobei der Gasabflussstromwärmetauscher (38) dazu angeordnet ist, den Luft- und Dampfabflussstrom aus dem Vorspülabschnitt (12) aufzunehmen.

3. Durchlaufgeschirrspülmaschine gemäß Anspruch 2, ferner umfassend einen Lüfter (72), der dazu konfiguriert ist, den Luft- und Dampfabflussstrom aktiv zu bewegen.

4. Durchlaufgeschirrspülmaschine gemäß Anspruch 3, wobei der Lüfter (72) dazu konfiguriert ist, einen maximalen Abflussstrom von weniger als 300 m³/h zu erzeugen.

5. Durchlaufgeschirrspülmaschine gemäß einem der vorhergehenden Ansprüche, wobei der Vorspülflüssigkeitswärmetauscher (40) als Röhrenwärmetauscher konfiguriert ist, der innerhalb des Vorspülflüssigkeitstanks (36) angeordnet ist.

6. Verfahren zum Geschirrspülen einer Zufuhr von Spülgut, wobei das Verfahren Folgendes umfasst:
Bewegen des Spülguts in einer Vorwärtsrichtung (21) durch einen Vorspülabschnitt (12), einen Hauptspülabschnitt (14) und einen Abspülabschnitt (16);
Bewegen eines Flüssigkeitsstroms in einer Rückwärtsrichtung durch den Abspülabschnitt (16), den Hauptspülabschnitt (14) und den Vorspülabschnitt (12);
**dadurch gekennzeichnet, dass** das Verfahren ferner Kühlen der Flüssigkeit in einem Vorspülflüssigkeitstank (36) des Vorspülabschnitts (12) durch Austauschen von Wärme mit an den Abspülabschnitt (16) abzugebendem Versorgungswasser umfasst, wobei der Vorspülflüssigkeitstank (36) zum Sprühen von Flüssigkeit aus einem Vorspülsprüher (62) des Vorspülabschnitts (12) auf das Spülgut dient;
Bewegen eines Luft- und Dampfstroms entlang der Rückwärtsrichtung durch den Abspülabschnitt (16), den Hauptspülabschnitt (14) und den Vorspülabschnitt (12); und
Abfließenlassen des Luft- und Dampfstroms über einen in dem Vorspülabschnitt (12) angeordneten (70) Auslass.

7. Verfahren gemäß Anspruch 6, ferner umfassend Kühlen des Luft- und Dampfstroms durch Austauschen von Wärme mit an den Abspülabschnitt (16) abzugebendem Versorgungswasser.

## Revendications

1. Lave-vaisselle de type tunnel comprenant
une conduite d'alimentation en eau (28) destinée à recevoir de l'eau propre à utiliser dans le lave-vaisselle (10) ;
une entrée d'articles à laver (22) destinée à la réception d'une alimentation en articles à laver devant être lavés par le lave-vaisselle (10) ;
une sortie d'articles à laver (24) destinée à l'évacuation desdits articles à laver lorsqu'ils ont été lavés par le lave-vaisselle (10) ;
une section de rinçage (16) en amont, par rapport à une direction d'alimentation (21) desdits articles à laver, de la sortie d'articles à laver (24) ;
une section de lavage principale (14) en amont, par rapport à ladite direction d'alimentation (21), de la section de rinçage (16) ;
une section de prélavage (12) en amont, par rapport à ladite direction d'alimentation (21), de la section de lavage principale (14), la section de prélavage (12) comprenant un pulvérisateur de prélavage (62) destiné à pulvériser un liquide de prélavage sur les articles à laver, un réservoir de liquide de prélavage (36) pour le liquide de prélavage qui doit être pulvérisé à partir du pulvérisateur de prélavage (62), et une entrée de liquide de prélavage (58, 68) conçue pour recevoir le liquide qui a été utilisé dans la ou les sections de lavage principales et/ou de rinçage (14, 16) ; et un échangeur de chaleur à flux de décharge de gaz (38) ;
**caractérisé en ce que** le lave-vaisselle de type tunnel comprend en outre un refroidisseur de liquide de prélavage (40) destiné à refroidir le liquide de prélavage du réservoir de liquide de prélavage (36), ledit refroidisseur de liquide de prélavage (40) étant conçu sous la forme d'un échangeur de chaleur de liquide de prélavage agencé pour échanger de la chaleur entre l'eau propre dans la conduite d'alimentation en eau (28) et le liquide de prélavage du réservoir de liquide de prélavage (36) ; et ledit échangeur de chaleur à flux de décharge de gaz (38) étant raccordé à la conduite d'alimentation en eau (28) en amont, par rapport à une direction d'écoulement de l'eau dans la conduite d'alimentation en eau (28), de l'échangeur de chaleur de liquide de prélavage (40), et conçu pour échanger de la chaleur entre l'eau d'alimentation et un flux de décharge d'air et de vapeur en provenance du lave-vaisselle (10).

2. Lave-vaisselle de type tunnel de la revendication 1, ledit échangeur de chaleur à flux de décharge de gaz (38) étant agencé de façon à recevoir ledit flux de décharge d'air et de vapeur en provenance de la section de prélavage (12).

3. Lave-vaisselle de type tunnel selon la revendication 2, comprenant en outre un ventilateur (72) conçu pour déplacer activement ledit flux de décharge d'air et de vapeur.

4. Lave-vaisselle de type tunnel selon la revendication 3, ledit ventilateur (72) étant conçu pour générer un débit de décharge maximal inférieur à 300 m³/h.

5. Lave-vaisselle de type tunnel selon une quelconque revendication précédente, ledit échangeur de chaleur de liquide de prélavage (40) étant conçu sous la forme d'un échangeur de chaleur à tube agencé à l'intérieur du réservoir de liquide de prélavage (36).

6. Procédé de lavage de vaisselle d'une alimentation en articles à laver, le procédé comprenant
le déplacement desdits articles à laver dans une direction vers l'avant (21) à travers une section de prélavage (12), une section de lavage principale (14) et une section de rinçage (16) ;
le déplacement d'un flux de liquide dans une direction vers l'arrière à travers la section de rinçage (16), la section de lavage principale (14) et la section de prélavage (12) ;
**caractérisé en ce que** le procédé comprend en outre le refroidissement dudit liquide dans un réservoir de liquide de prélavage (36) de la section de prélavage (12) par échange de chaleur avec l'eau d'alimentation devant être fournie à la section de rinçage (16), ledit réservoir de liquide de prélavage (36) étant destiné au liquide à pulvériser à partir d'un pulvérisateur de prélavage (62) de la section de prélavage (12) sur les articles à laver ;
le déplacement d'un flux d'air et de vapeur le long de ladite direction vers l'arrière à travers la section de rinçage (16), la section de lavage principale (14) et la section de prélavage (12) ; et
la décharge dudit flux d'air et de vapeur par l'intermédiaire d'une sortie (70) agencée dans ladite section de prélavage (12).

7. Procédé selon la revendication 6, comprenant en outre le refroidissement dudit flux d'air et de vapeur par échange de chaleur avec de l'eau d'alimentation devant être fournie à la section de rinçage (16).
